# EUROPÄISCHE PATENTSCHRIFT

(11) **EP 3 509 902 B1**
(45) Veröffentlichungstag und Bekanntmachung des Hinweises auf die Patenterteilung: **09.12.2020**
(21) Anmeldenummer: 17765385.4
(22) Anmeldetag: 04.09.2017
(51) Int. Cl.: B60N 2/12, B60N 2/22, B60N 2/225, B60N 2/235, B60N 2/30

(54) **FAHRZEUGSITZ**
VEHICLE SEAT
SIÈGE DE VÉHICULE

(30) Priorität: 08.09.2016 DE 102016217070; 08.03.2017 DE 102017203816
(43) Veröffentlichungstag der Anmeldung: 17.07.2019
(73) Patentinhaber: Adient Luxembourg Holding S.à r.l., 1855 Luxembourg (LU)
(72) Erfinder: KAEMMERER, Joachim, 67663 Kaiserslautern (DE)
(74) Vertreter: Liedhegener, Ralf
(86) Internationale Anmeldenummer: PCT/EP2017/072085
(87) Internationale Veröffentlichungsnummer: WO 2018/046433

(56) Entgegenhaltungen:
- EP-A2- 2 386 441
- WO-A1-02/092382
- DE-A1-102013 007 445
- FR-A1- 2 929 179

## Beschreibung

Die Erfindung betrifft einen Fahrzeugsitz mit den Merkmalen des Oberbegriffs des Anspruchs 1.

### Stand der Technik

Aus der WO 2002/022391 A1 ist ein Fahrzeugsitz, mit einem Sitzkissen, einer Rückenlehne und einem gelenkigen Sitzgestell mit vorderen und hinteren Füßen bekannt, wobei die hinteren Füße lösbar an der Fahrzeugstruktur befestigbar sind, wobei der Fahrzeugsitz zwischen wenigstens einer zur Personenbeförderung geeigneten Sitzstellung und einer zusammengeklappten Packagestellung einstellbar ist, wobei zum Übergang von der Sitzstellung in die Packagestellung nach dem Lösen der im Bereich der Rückenlehne vorhandenen hinteren Füße die Rückenlehne eine Versatzbewegung in Richtung des Sitzkissens vollführt, während das Sitzkissen mit einer Schwenkbewegung um eine im vorderen Bereich des Sitzkissens angeordnete Schwenkachse, die ihre Anlenkstellen an den vorderen Füßen aufweist, hochklappt, wobei die Bewegungen der Rückenlehne und des Sitzkissens zwischen der Sitzstellung und der Packagestellung durch Kopplungsmittel gekoppelt sind.

Aus der DE 10 2008 050 468 B3 ist ein Fahrzeugsitz bekannt, der von einer zur Personenbeförderung geeigneten Gebrauchsstellung in eine vorgeschwenkte Nichtgebrauchsstellung überführbar ist, mit einer Basis, einer Schwinge, die an einem vorderen Fuß angelenkt ist, einem Sitzkissen, das an der Schwinge angelenkt ist und als Struktur einen Sitzkissenträger aufweist, von dem hinten ein Arm absteht, an dessen Ende ein Gelenk angeordnet ist, einem Lenker, der an dem vorderen Fuß angelenkt ist, einem hinteren Fuß, der am Lenker angelenkt ist und mit der Basis lösbar verriegelbar ist, und einer Lehne, die mittels wenigstens eines verriegelbaren Beschlags um eine Lehnenschwenkachse schwenkbar am hinteren Fuß angelenkt und in ihrer Neigung relativ zum hinteren Fuß einstellbar ist, wobei das Sitzkissen mittels des Gelenks versetzt zur Lehnenschwenkachse an der Lehne angelenkt ist.

Aus der WO 02/092382 A1 ist ein Fahrzeugsitz bekannt, der eine Gebrauchsstellung und eine Einstiegs-/Ausstiegsstellung aufweist. Der Fahrzeugsitz umfasst ein aufsteigendes Stützelement, das dafür geeignet ist, an einem Fahrzeuginnenraumboden angelenkt zu werden, eine Rückenlehne, die an dem aufsteigenden Stützelement angelenkt ist, ein oberes Element, das an der Rückenlehne angelenkt ist, einen vorderen Schenkel, der an dem oberen Element angelenkt ist und dafür geeignet ist, an dem Fahrzeuginnenraumboden angelenkt zu werden. Ein Einstiegs-/Ausstiegsmechanismus ist dafür konfiguriert, das aufsteigende Stützelement und den Fahrzeuginnenraumboden relativ zueinander zu befestigen, wobei der Sitz in die Einstiegs-/Ausstiegsstellung gebracht werden kann, indem der Einstiegs-/Ausstiegsmechanismus entriegelt wird und der Sitz in eine Vorwärtsrichtung geschwenkt wird, wobei die Rückenlehne relativ zu dem aufsteigenden Stützelement fixiert bleibt, wenn der Sitz aus der Gebrauchsstellung in die Einstiegs-/Ausstiegsstellung bewegt wird.

Die FR 2 929 179 A1 und die WO 02/092382 A1 offenbaren jeweils einen Fahrzeugsitz, der von einer zur Personenbeförderung geeigneten Gebrauchsstellung in eine Nichtgebrauchsstellung überführbar ist, aufweisend ein Sitzkissen mit einem Sitzkissenträger, eine Rückenlehne, eine mit einem Fahrzeug verbindbare Basis, eine Schwinge, die mittels eines ersten Gelenks mit der Basis oder einem mit der Basis fest verbundenen Bauteil schwenkbar verbunden ist, und mittels eines zweiten Gelenks mit dem Sitzkissenträger des Sitzkissens schwenkbar verbunden ist, einen hinteren Fuß, der mittels eines dritten Gelenks mit der Basis oder einem mit der Basis fest verbundenen Bauteil schwenkbar verbunden ist, wobei eine Schwenkbewegung des hinteren Fußes um das dritte Gelenk verriegelbar ist, und wobei der hintere Fuß mittels eines verriegelbaren vierten Gelenks mit der Rückenlehne schwenkbar verbunden ist, und ein fünftes Gelenk, das die Rückenlehne mit dem Sitzkissenträger verbindet.

Die DE 10 2013 007 445 A1 offenbart einen Fahrzeugsitz, der von einer zur Personenbeförderung geeigneten Gebrauchsstellung in eine Nichtgebrauchsstellung überführbar ist, aufweisend ein Sitzkissen mit einem Sitzkissenträger, eine Rückenlehne, eine mit einem Fahrzeug verbindbare Basis, eine Schwinge, die mittels eines ersten Gelenks mit der Basis oder einem mit der Basis fest verbundenen Bauteil schwenkbar verbunden ist, und mittels eines zweiten Gelenks mit dem Sitzkissenträger des Sitzkissens schwenkbar verbunden ist, einen hinteren Fuß, der mittels eines dritten Gelenks mit der Basis oder einem mit der Basis fest verbundenen Bauteil schwenkbar verbunden ist, wobei das dritte Gelenk mit dem ersten Gelenk fluchtet, und wobei der hintere Fuß mittels eines vierten Gelenks mit der Rückenlehne schwenkbar verbunden ist, ein fünftes Gelenk, das die Rückenlehne mit dem Sitzkissenträger verbindet und eine Pleuelstange, die mittels eines sechsten Gelenks mit dem hinteren Fuß und mittels eines siebten Gelenks mit der Basis verbunden ist.

Die EP 2 386 441 A2 offenbart Fahrzeugsitz mit einer Sitzbaugruppe und einem an einer Fahrzeugkarosserie befestigten Rahmen, wobei die Sitzbaugruppe relativ zum Rahmen mittels einer Verstellbewegung von einer ersten Stellung in eine zweite Stellung bewegbar ist, wobei der Fahrzeugsitz wenigstens ein Dämpfungsorgan zum zumindest teilweisen Dämpfen der Verstellbewegung aufweist, weiches zwischen der Sitzbaugruppe und dem Rahmen angeordnet ist.

### Aufgabe

Der Erfindung liegt die Aufgabe zu Grunde, einen Fahrzeugsitz der eingangs genannten Art zu verbessern, insbesondere die Kosten und die Anzahl der Bauteile zu reduzieren.

### Lösung

Diese Aufgabe wird erfindungsgemäß gelöst durch einen Fahrzeugsitz, insbesondere Kraftfahrzeugsitz, der von wenigstens einer zur Personenbeförderung geeigneten Gebrauchsstellung in wenigstens eine Nichtgebrauchsstellung überführbar ist, aufweisend ein Sitzkissen mit einem Sitzkissenträger, eine Rückenlehne, eine mit einem Fahrzeug verbindbare Basis, eine Schwinge, die mittels eines ersten Gelenks mit der Basis oder einem mit der Basis fest verbundenen Bauteil schwenkbar verbunden ist, und mittels eines zweiten Gelenks mit dem Sitzkissenträger des Sitzkissens schwenkbar verbunden ist, einen hinteren Fuß, der mittels eines dritten Gelenks mit der Basis oder einem mit der Basis fest verbundenen Bauteil schwenkbar verbunden ist, wobei eine Schwenkbewegung des hinteren Fußes um das dritte Gelenk verriegelbar ist, und wobei der hintere Fuß mittels eines vierten Gelenks mit der Rückenlehne schwenkbar verbunden ist, ein fünftes Gelenk, das die Rückenlehne mit dem Sitzkissenträger verbindet, wobei wenigstens eines der Gelenke ein Beschlag ist.

Das fünfte Gelenk (die gelenkige Verbindung zwischen der Rückenlehne und Sitzkissenträger) ist ein Beschlag. Indem das fünfte Gelenk ein Beschlag ist, kann ein kostengünstiger Fahrzeugsitz bereitgestellt werden, der nur wenige Bauteile aufweist.

Vorteilhafte Ausgestaltungen sind Gegenstand der Unteransprüche.

Eine Schwenkbewegung des hinteren Fußes um das dritte Gelenk kann mittels eines Schlosses verriegelbar sein. Das Schloss kann eine Verriegelungsvorrichtung sein, wie diese beispielsweise aus der DE 103 04 574 B4 bekannt ist. Das Schloss kann ein Drehfallenschloss sein. Das Schloss kann an dem hinteren Fuß befestigt sein und mit einem Gegenelement der Basis, insbesondere einem an der Basis befestigten Bolzen, verriegelbar sein. Alternativ kann das Schloss an der Basis befestigt sein und mit einem Gegenelement des hinteren Fußes, insbesondere einem an dem hinteren Fuß befestigten Bolzen, verriegelbar sein. Vorzugsweise ist das Schloss dabei, in Fahrrichtung betrachtet, vor dem dritten Gelenk angeordnet. In einer weiteren alternativen Ausführungsform ist das Schloss an dem vorderen Fuß befestigt und mit einem Gegenelement des hinteren Fußes, insbesondere einem an dem hinteren Fuß befestigten Bolzen, verriegelbar. Vorzugsweise ist das Schloss dabei, in Fahrrichtung betrachtet, vor dem dritten Gelenk angeordnet. Dadurch ist der Fußraum unter dem Fahrzeugsitz vergrößert.

Das dritte Gelenk (die gelenkige Verbindung zwischen dem hinteren Fuß und der Basis) kann ein weiterer Beschlag sein. Indem das dritte Gelenk ein weiterer Beschlag ist, ist ein kostengünstiger Fahrzeugsitz bereitgestellt, der nur wenige Bauteile aufweist. Zudem ist eine Verletzungsgefahr beim Zurückschwenken des Fahrzeugsitzes aus einer Einstiegsstellung in eine Gebrauchsstellung vermieden. Der hintere Fuß weist keine weiteren Bauteile, insbesondere kein Schloss, auf, die bei einem Zurückschwenken des hinteren Fußes in die Gebrauchsstellung einen Passagier einer hinter dem Fahrzeugsitz angeordneten Sitzreihe verletzen könnten.

Wenigstens ein Beschlag kann als ein Rastbeschlag oder als ein Getriebebeschlag ausgeführt sein. Wenigstens ein Beschlag kann ein Rastbeschlag sein.

Ein Rastbeschlag kann ein erstes Beschlagteil und ein zweites Beschlagteil aufweisen. Das erste Beschlagteil und das zweite Beschlagteil können relativ zueinander verdrehbar sein. Der Rastbeschlag kann wenigstens einen Riegel aufweisen, welcher in einem der beiden Beschlagteile zwischen einem verriegelten Zustand und einem entriegelten Zustand beweglich geführt ist, und welcher im verriegelten Zustand mit einem Zahnkranz des anderen der beiden Beschlagteile zusammenwirkt. Ein Rastbeschlag ist beispielsweise aus der DE 10 2006 015 560 B3 bekannt. Ein Rastbeschlag wird auch als diskontinuierlicher Beschlag bezeichnet.

Insbesondere zur Elektrifizierung des erfindungsgemäßen Fahrzeugsitzes, kann wenigstens ein Beschlag als ein Getriebebeschlag ausgebildet sein. Ein Getriebebeschlag wird auch als kontinuierlicher Beschlag oder Taumelbeschlag bezeichnet. Ein Getriebebeschlag ist beispielsweise aus der DE 10 2010 022 615 A1 bekannt. In Kombination mit einem elektrischen Antrieb ermöglicht ein Getriebebeschlag einen elektrisch betriebenen Übergang zwischen der Gebrauchsstellung und der Nichtgebrauchsstellung. Ein als Getriebebeschlag ausgebildeter Beschlag kann eine Drehbewegung des hinteren Fußes mit überlagerter Taumelbewegung ermöglichen.

Indem das als Beschlag ausgeführte Gelenk wahlweise ein Rastbeschlag oder Getriebebeschlag sein kann, ist ein Baukasten zur Verfügung gestellt, mittels dessen, durch Auswahl des Beschlagtyps, sowohl ein manueller Fahrzeugsitz als auch ein elektrisch angetriebener Fahrzeugsitz aufgebaut werden können.

Es sind zudem Getriebebeschläge einsetzbar, die keine taumelnde, sondern eine rein drehenden Abtriebsbewegung aufweisen, wie beispielsweise aus der DE 10 2004 005 980 B3 bekannt. Grundsätzlich kann der Beschlag auch auf anderen Zahnradgetriebetypen basieren.

Der Fahrzeugsitz kann aus der wenigstens einen Gebrauchsstellung in eine Einstiegsstellung als Nichtgebrauchsstellung überführbar sein. Das erste Gelenk, das zweite Gelenk, das dritte Gelenk und das vierte Gelenk können eine, insbesondere erste, Viergelenkanordnung zur Überführung des Fahrzeugsitzes aus der wenigstens einen Gebrauchsstellung in die Einstiegsstellung bilden.

Der Fahrzeugsitz kann aus der wenigstens einen Gebrauchsstellung in eine Bodenstellung als Nichtgebrauchsstellung überführbar sein. Das erste Gelenk, das zweite Gelenk, das vierte Gelenk und das fünfte Gelenk können eine, insbesondere zweite, Viergelenkanordnung zur Überführung des Fahrzeugsitzes aus der wenigstens einen Gebrauchsstellung in die Bodenstellung bilden.

Vorzugsweise ist die Basis als eine Sitzschienenanordnung ausgebildet, welche die Möglichkeit einer Längseinstellung des Fahrzeugsitzes in und entgegen einer Längsrichtung ermöglicht. Dadurch lässt sich der Sitz in eine gegenüber der wenigstens einen Gebrauchsstellung in Längsrichtung nach vorne verlagerte Einstiegsstellung bringen. Dies erleichtert insbesondere den Zugang zu einer hinter dem Fahrzeugsitz angeordneten Sitzreihe.

### Figuren und Ausführungsformen der Erfindung

Im Folgenden ist die Erfindung anhand zweier in den Figuren dargestellter vorteilhafter Ausführungsbeispiele näher erläutert. Die Erfindung ist jedoch nicht auf diese Ausführungsbeispiele beschränkt. Es zeigen:
- Fig. 1:: eine schematische Seitenansicht eines erfindungsgemäßen Fahrzeugsitzes gemäß eines ersten Ausführungsbeispiels in einer Gebrauchsstellung,
- Fig. 2:: eine schematische Seitenansicht des Fahrzeugsitzes aus Fig. 1 in einer Einstiegsstellung,
- Fig. 3:: eine schematische Seitenansicht des Fahrzeugsitzes aus Fig. 1 in einer Bodenstellung,
- Fig. 4:: eine schematische Seitenansicht eines erfindungsgemäßen Fahrzeugsitzes gemäß eines zweiten Ausführungsbeispiels in der Gebrauchsstellung,
- Fig. 5:: eine schematische Seitenansicht des Fahrzeugsitzes aus Fig. 4 in der Einstiegsstellung, und
- Fig. 6:: eine schematische Seitenansicht des Fahrzeugsitzes aus Fig. 4 in der Bodenstellung.

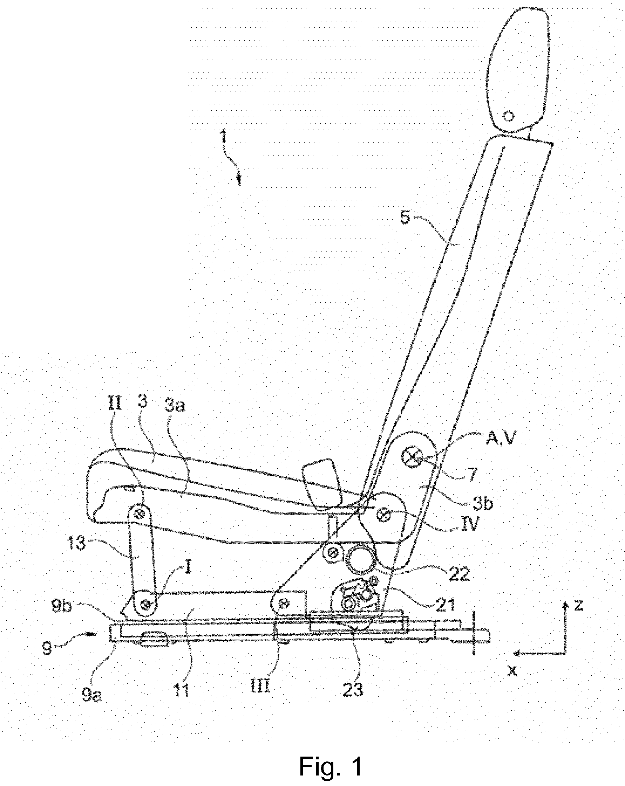

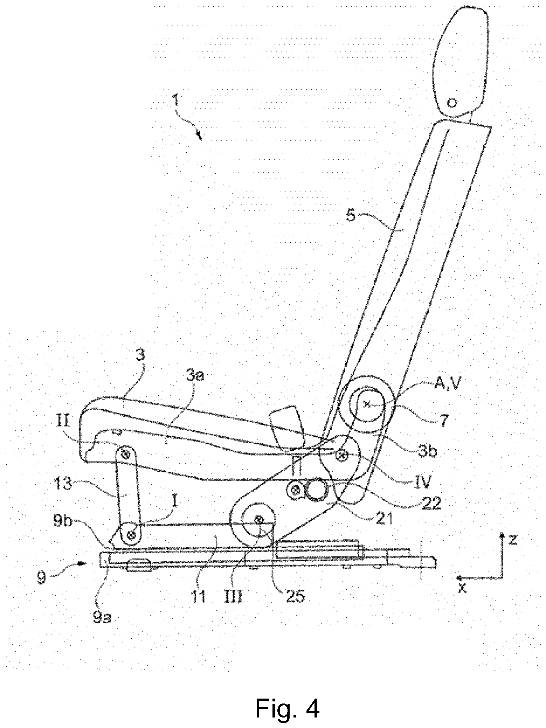

Ein in den Figuren 1 bis 3 schematisch dargestellter Fahrzeugsitz 1 gemäß eines ersten Ausführungsbeispiels und ein in den Figuren 4 bis 6 schematisch dargestellter Fahrzeugsitz 1 gemäß eines zweiten Ausführungsbeispiels werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsstellung mit aufrecht stehender Rückenlehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Figur 1 zeigt den Fahrzeugsitz 1 gemäß des ersten Ausführungsbeispiels in einer zur Personenbeförderung geeigneten Gebrauchsstellung. Der Fahrzeugsitz 1, der beispielsweise als Außensitz einer mittleren oder hinteren Sitzreihe eines Kraftfahrzeugs, beispielsweise eines Vans, vorgesehen sein kann, weist ein Sitzkissen 3 und die Rückenlehne 5 auf. Unter dem Begriff Sitzkissen 3 soll die gesamte Baugruppe, bestehend aus einer Struktur, vorliegend einem Sitzkissenträger 3a, und einem bezogenen Polster verstanden werden. Soweit Bauteile als am Sitzkissen 3 angelenkt beschrieben sind, ist hierunter eine Anlenkung an der Struktur des Sitzkissens 3 zu verstehen. Unter dem Begriff Rückenlehne 5 soll die gesamte Baugruppe, bestehend aus einer Lehnenstruktur und einem bezogenen Polster verstanden werden. Soweit Bauteile als an der Rückenlehne 5 angelenkt beschrieben sind, ist hierunter eine Anlenkung an der Lehnenstruktur der Rückenlehne 5 zu verstehen.

Die Rückenlehne 5 ist mittels wenigstens eines verriegelbaren und entriegelbaren Beschlags 7, vorliegend zweier Beschläge 7, an dem Sitzkissenträger 3a angebunden. In einem entriegelten Zustand der Beschläge 7 ist die Rückenlehne 5 relativ zum Sitzkissenträger 3a schwenkbar um eine parallel zur Querrichtung verlaufende Schwenkachse A. Mittels der Beschläge 7 ist die Rückenlehne 5 in ihrer Neigung einstellbar, so dass mehrere Gebrauchsstellungen definiert sind. In einer Abwandlung des Ausführungsbeispiels können die Beschläge in nur einer Gebrauchsstellung verriegelbar sein.

Im Folgenden wird der Einfachheit halber und soweit sinnvoll nur eine linke Fahrzeugsitzseite des im Wesentlichen symmetrischen Fahrzeugsitzes 1 beschrieben, d.h. die nachfolgend genannten Bauteile sind, wenn nicht abweichend beschrieben, doppelt (ggf. spiegelsymmetrisch) vorhanden. Zunächst wird der Fahrzeugsitz 1 in einer in der Figur 1 dargestellten speziellen Gebrauchsstellung, nämlich der Designstellung, beschrieben, in welcher die Rückenlehne 5 um beispielsweise 23° gegenüber der Vertikalrichtung z nach hinten geneigt ist.

Eine Basis 9 des Fahrzeugsitzes 1 ist mit der Struktur des Kraftfahrzeugs verbunden. Die Basis 9 ist im Ausführungsbeispiel als Sitzschienenanordnung ausgebildet, welche die Möglichkeit einer Längseinstellung des Fahrzeugsitzes 1 in und entgegen der Längsrichtung x eröffnet. Die Basis 9 weist vorliegend eine direkt mit der Fahrzeugstruktur verbundene erste Sitzschiene 9a und eine relativ zu dieser in Längsrichtung verschiebbare zweite Sitzschiene 9b auf. Die beiden im 10

Wesentlichen U-förmig profilierten Sitzschienen 9a und 9b hintergreifen einander wechselseitig mit ihren nach innen bzw. nach außen gebogenen Längsrändern und sind, mittels einer an sich bekannten Schienenverriegelungsvorrichtung, miteinander verriegelbar. Die Schienenverriegelungsvorrichtung kann vom Benutzer des Fahrzeugsitzes 1 mittels eines an sich bekannten Entriegelungsbügels entriegelt werden.

An der Basis 9 ist ein vorderer Fuß 11 angebracht, und zwar vorliegend fest mit der zweiten Sitzschiene 9b verbunden. Der vordere Fuß 11 kann in einer Abwandlung des Ausführungsbeispiels aber auch lösbar mit der Basis 9 verriegelt sein. Der vordere Fuß 11 der linken Fahrzeugsitzseite kann mit dem vorderen Fuß 11 der rechten Fahrzeugsitzseite über eine vordere Quertraverse verbunden sein. Am vorderen Fuß 11 ist mittels einer Schwinge 13 das Sitzkissen 3 angelenkt, wobei die Schwinge 13 zwei Enden aufweist und im Bereich dieser beiden Enden jeweils ein Gelenk vorgesehen ist, von denen ein erstes Gelenk I, vorliegend ein Drehgelenk, die Anlenkung der Schwinge 13 am vorderen Fuß 11 bildet. Ein zweites Gelenk II, vorliegend ein Drehgelenk, bildet die Anlenkung der Schwinge 13 am Sitzkissen 3, vorliegend in einem vorderen Endbereich des Sitzkissens 3.

An der Basis 9 ist ferner hinter dem vorderen Fuß 11 ein vom vorderen Fuß 11 gesondert ausgebildeter hinterer Fuß 21 angeordnet. Der hintere Fuß 21 der linken Fahrzeugsitzseite ist mit dem hinteren Fuß 21 der rechten Fahrzeugsitzseite über eine Querverbindung, insbesondere ein Querrohr 22 verbunden. Der hintere Fuß 21 ist, vorliegend in einem vorderen Bereich des hinteren Fußes 21, mittels eines dritten Gelenks III, vorliegend ein Drehgelenk, an dem vorderen Fuß 11 schwenkbar angelenkt. Der hintere Fuß 21 ist zudem, vorliegend in einem hinteren Bereich des hinteren Fußes 21, mittels eines am hinteren Fuß 21 angebrachten Schlosses 23 lösbar mit der Basis 9 verriegelbar. Das Schloss 23 ist mit einem an Gegenelement der Basis 9, beispielsweise einem Bolzen in der zweiten Sitzschiene 9b, verriegelbar. Dadurch ist eine Schwenkbewegung des hinteren Fußes 21 um das dritte Gelenk III verriegelbar. Somit ist der hintere Fuß 21 mittels des dritten Gelenks III über den vorderen Fuß 11 gelenkig mit der Basis 9 verbunden. Der hintere Fuß 21 ist zudem, vorliegend in einem oberen Bereich des hinteren Fußes 21, mittels eines vierten Gelenks IV, vorliegend ein Drehgelenk, an der Rückenlehne 5 schwenkbar angelenkt.

Das Sitzkissen 3 ist beidseitig mittels genau eines Beschlags 7, vorliegend unmittelbar, an der Rückenlehne 5 angelenkt. Hierzu ist der rahmenförmige Sitzkissenträger 3a, genauer gesagt dessen beiden Seitenteile, in Fahrtrichtung hinten mit einem Arm 3b versehen, der vorliegend am Sitzkissenträger 3a angeformt ist und schräg nach oben und hinten absteht. Die Beschläge 7 bilden jeweils ein fünftes Gelenk V. Die beiden fünften Gelenke V bilden somit die Schwenkachse A. In einem Endbereich des Arms 3b des Sitzkissenträgers 3a ist jeweils ein erstes Beschlagteil des Beschlags 7 angebracht. Ein relativ zu dem ersten Beschlagteil um die Schwenkachse A schwenkbares und mit dem ersten Beschlagteil verriegelbares zweites Beschlagteil des Beschlags 7 ist an der Rückenlehne 5 befestigt. Die Rückenlehne 5 ist mittels des Beschlags 7 in ihrer Neigung relativ zu dem Sitzkissen 3 einstellbar. Der Beschlag 7 ist versetzt zum vierten Gelenk IV angeordnet. In der Designstellung befindet sich das fünfte Gelenk V oberhalb und in Fahrrichtung hinter dem vierten Gelenk IV.

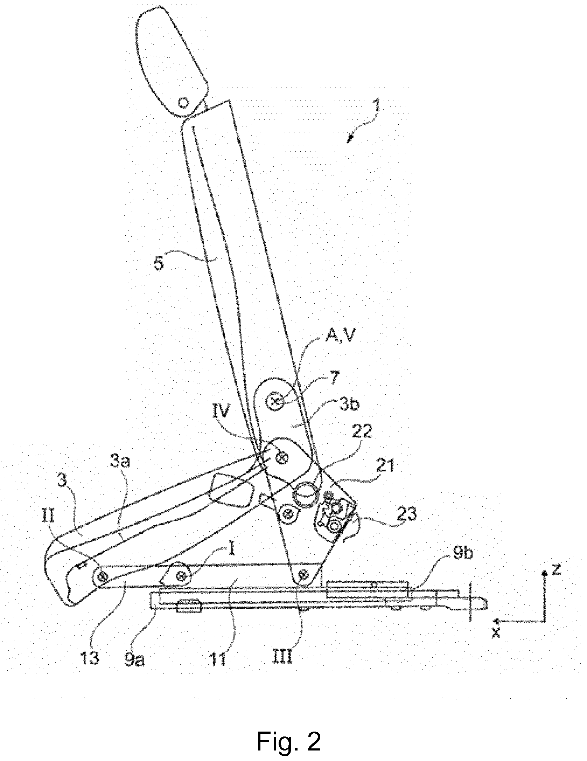

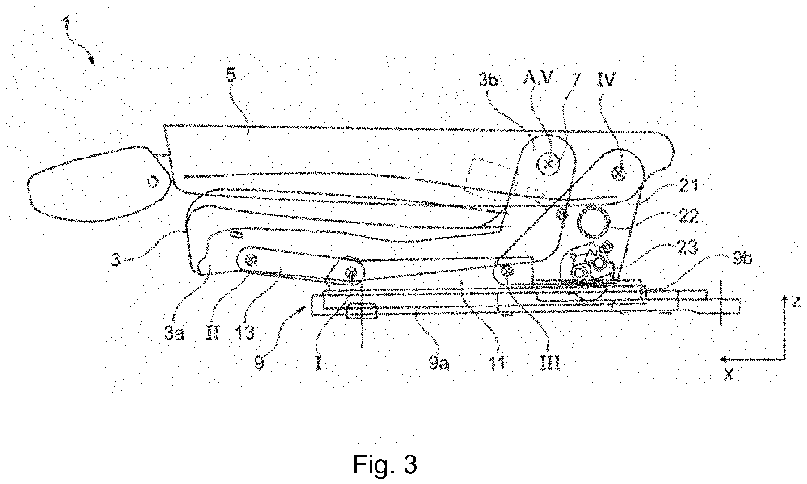

Der Fahrzeugsitz 1 kann aus der in Figur 1 dargestellten zur Personenbeförderung geeigneten Gebrauchsstellung in eine in Figur 2 dargestellte Einstiegsstellung überführt werden. In der Einstiegsstellung ist der Fahrzeugsitz 1 im Vergleich zu den Gebrauchsstellungen relativ zur Basis 9 nach vorne versetzt. Vorzugsweise ist der Fahrzeugsitz 1 zudem mittels der Sitzschienen 9a, 9b in Längsrichtung nach vorne verschoben. Dadurch ist ein Zutritt zu einer hinter dem Fahrzeugsitz 1 angeordneten Sitzreihe erleichtert. Zusätzlich kann der Fahrzeugsitz 1 aus der Gebrauchsstellung in eine in Figur 3 dargestellte Bodenstellung überführt werden, in der die Rückenlehne 5 weitgehend horizontal angeordnet ist und eine Rückseite der Rückenlehne 5 als erweiterter Ladeboden eines Fahrzeugs dienen kann. In den Gebrauchsstellungen und der in Figur 3 dargestellten Bodenstellung ist der hintere Fuß 21 mittels des Schlosses 23 mit der zweiten Sitzschiene 9b der Basis 9 verriegelt.

Bei verriegelten Beschlägen 7 und entriegeltem Schloss 23 bilden das erste Gelenk I, das zweite Gelenk II, das dritte Gelenk III und das vierte Gelenk IV eine erste Viergelenkanordnung zur Überführung des Fahrzeugsitzes 1 aus den Gebrauchsstellungen in die Einstiegsstellung.

Zur Überführung des Fahrzeugsitzes 1 aus einer der Gebrauchsstellungen in die Einstiegsstellung wird das Schloss 23 entriegelt. Dadurch kann der hintere Fuß 21 um das dritte Gelenk III nach vorne schwenken. Infolge des Schwenkens des hinteren Fußes 21 um das dritte Gelenk III verlagert die zuvor beschriebene erste Viergelenkanordnung das Sitzkissen 3 und die mittels der Beschläge 7 mit dem Sitzkissen verriegelte Rückenlehne 5 nach vorne. Die Rückenlehne 5 ist dabei in starrer Anordnung relativ zum Sitzkissen 3, schwenkt aber insgesamt nach vorne. Die um das erste Gelenk I nach vorne schwenkende Schwinge 13 senkt das vordere Ende des Sitzkissens 3 ab, während die Schwenkbewegung des hinteren Fußes 21 um das dritte Gelenk III das hintere Ende des Sitzkissens 3 anhebt. In den Gebrauchsstellungen ist die zuvor beschriebene erste Viergelenkanordnung durch das Schloss 23 verriegelt.

Beim Übergang von der Gebrauchsstellung in die Einstiegsstellung wird vorzugsweise die Verriegelung der Sitzschienen 9a und 9b zwangsgesteuert entriegelt, so dass die zweite Sitzschiene 9b relativ zur ersten Sitzschiene 9a nach vorne verfahrbar ist, was den Raum hinter dem Fahrzeugsitz 1, also das Einstiegsmaß, vergrößert und den Zugang zusätzlich erleichtert. Dies geschieht beispielsweise, indem ein mit dem hinteren Fuß 21 verbundenes Bauteil beim Schwenken des hinteren Fußes die Schienenverriegelungsvorrichtung betätigt und entriegelt.

Wenn die Einstiegsstellung erreicht ist, in welcher der Zugang zu einer hinteren Sitzreihe erleichtert ist, kann optional das Schloss 23 oder eine in den Figuren nicht dargestellte weitere Verriegelungsvorrichtung mit dem vorderen Fuß 11 verriegeln, so dass der hintere Fuß 21 und der vordere Fuß 11 vorzugsweise zumindest mittelbar miteinander verriegelt sind. Die Rückkehr in die zuvor eingenommene Gebrauchsstellung erfolgt nach dem Lösen der besagten Verriegelungsvorrichtung zwischen den Füßen 11 und 21 in umgekehrter Reihenfolge der beschriebenen Schritte.

Bei verriegeltem Schloss 23 und dadurch verriegeltem dritten Gelenk III bilden das erste Gelenk I, das zweite Gelenk II, das vierte Gelenk IV und das fünfte Gelenk V eine zweite Viergelenkanordnung, insbesondere zur Überführung des Fahrzeugsitzes 1 aus einer der Gebrauchsstellungen in die Bodenstellung. Zur Überführung des Fahrzeugsitzes 1 aus einer der Gebrauchsstellungen in die Bodenstellung werden die Beschläge 7 entriegelt. Dadurch kann die Rückenlehne 5 um das vierte Gelenk IV nach vorne schwenken. Infolge des Schwenkens der Rückenlehne 5 um das vierte Gelenk IV verlagert die zuvor beschriebene zweite Viergelenkanordnung das Sitzkissen 3 nach vorne und untern. Die Rückenlehne 5 liegt vorzugsweise horizontal auf dem Sitzkissen 3 auf. In den Gebrauchsstellungen ist die zweite Viergelenkanordnung durch die Beschläge 7 verriegelt.

Bei der Neigungseinstellung der Rückenlehne 5 werden die Beschläge 7 entriegelt, die Rückenlehne 5 um die Schwenkachse A in die gewünschte Stellung geschwenkt, wobei sich auch die zweite Viergelenkanordnung bewegt, und dann jeder Beschlag 7 wieder verriegelt. Die Bewegung der zweiten Viergelenkanordnung ändert auch die Neigung des Sitzkissens 3. Die Rückenlehne 5 kann auch flach nach hinten geschwenkt werden, so dass der Fahrzeugsitz 1 eine Liegestellung einnimmt.

Sämtliche Gelenke I, II, III, IV, V sind als Drehgelenke ausgebildet, die jeweils eine Drehung um jeweils eine parallel zur Querrichtung verlaufende Drehachse ermöglichen. Das erste Gelenk I definiert eine erste Drehachse, das zweite Gelenk II definiert eine zweite Drehachse, das dritte Gelenk I definiert eine dritte Drehachse, das vierte Gelenk IV definiert eine vierte Drehachse und das fünfte Gelenk V definiert eine fünfte Drehachse, nämlich die Schwenkachse A.

Die Figuren 4 bis 6 zeigen schematisch den Fahrzeugsitz 1 gemäß des zweiten Ausführungsbeispiels. Mehrere wesentliche Merkmale und Funktionen des Fahrzeugsitzes 1 des zweiten Ausführungsbeispiels entsprechen Merkmalen und Funktionen des Fahrzeugsitzes 1 gemäß des ersten Ausführungsbeispiels, weshalb gleiche, oder gleichwirkende Bauteile der beiden Ausführungsbeispiele gleiche Bezugszeichen tragen.

Figur 4 zeigt den Fahrzeugsitz 1 gemäß des zweiten Ausführungsbeispiels in einer zur Personenbeförderung geeigneten Gebrauchsstellung. Der Fahrzeugsitz 1, der beispielsweise als Außensitz einer mittleren oder hinteren Sitzreihe eines Kraftfahrzeugs, beispielsweise eines Vans, vorgesehen sein kann, weist ein Sitzkissen 3 und die Rückenlehne 5 auf. Unter dem Begriff Sitzkissen 3 soll die gesamte Baugruppe, bestehend aus einer Struktur, vorliegend einem Sitzkissenträger 3a, und einem bezogenen Polster verstanden werden. Soweit Bauteile als am Sitzkissen 3 angelenkt beschrieben sind, ist hierunter eine Anlenkung an der Struktur des Sitzkissens 3 zu verstehen. Unter dem Begriff Rückenlehne 5 soll die gesamte Baugruppe, bestehend aus einer Lehnenstruktur und einem bezogenen Polster verstanden werden. Soweit Bauteile als an der Rückenlehne 5 angelenkt beschrieben sind, ist hierunter eine Anlenkung an der Lehnenstruktur der Rückenlehne 5 zu verstehen.

Die Rückenlehne 5 ist vorzugsweise mittels wenigstens eines verriegelbaren und entriegelbaren ersten Beschlags 7, vorliegend zweier erster Beschläge 7, an dem Sitzkissenträger 3a angebunden. In einem entriegelten Zustand der ersten Beschläge 7 ist die Rückenlehne 5 relativ zum Sitzkissenträger 3a schwenkbar um eine parallel zur Querrichtung verlaufende Schwenkachse A. Mittels der ersten Beschläge 7 ist die Rückenlehne 5 in ihrer Neigung einstellbar, so dass mehrere Gebrauchsstellungen definiert sind. In einer Abwandlung des Ausführungsbeispiels können die ersten Beschläge in nur einer Gebrauchsstellung verriegelbar sein.

Im Folgenden wird der Einfachheit halber und soweit sinnvoll nur eine linke Fahrzeugsitzseite des im Wesentlichen symmetrischen Fahrzeugsitzes 1 beschrieben, d.h. die nachfolgend genannten Bauteile sind, wenn nicht abweichend beschrieben, doppelt (ggf. spiegelsymmetrisch) vorhanden. Zunächst wird der Fahrzeugsitz 1 in einer in der Figur 4 dargestellten speziellen Gebrauchsstellung, nämlich der Designstellung, beschrieben, in welcher die Rückenlehne 5 um beispielsweise 23° gegenüber der Vertikalrichtung z nach hinten geneigt ist.

Eine Basis 9 des Fahrzeugsitzes 1 ist mit der Struktur des Kraftfahrzeugs verbunden. Die Basis 9 ist im Ausführungsbeispiel als Sitzschienenanordnung ausgebildet, welche die Möglichkeit einer Längseinstellung des Fahrzeugsitzes 1 in und entgegen der Längsrichtung x eröffnet. Die Basis 9 weist vorliegend eine direkt mit der Fahrzeugstruktur verbundene erste Sitzschiene 9a und eine relativ zu dieser in Längsrichtung verschiebbare zweite Sitzschiene 9b auf. Die beiden im Wesentlichen U-förmig profilierten Sitzschienen 9a und 9b hintergreifen einander wechselseitig mit ihren nach innen bzw. nach außen gebogenen Längsrändern und sind, insbesondere mittels einer an sich bekannten Schienenverriegelungsvorrichtung, miteinander verriegelbar. Die Schienenverriegelungsvorrichtung kann vom Benutzer des Fahrzeugsitzes 1 mittels eines an sich bekannten Entriegelungsbügels entriegelt werden.

An der Basis 9 ist ein vorderer Fuß 11 angebracht, und zwar vorliegend fest mit der zweiten Sitzschiene 9b verbunden. Der vordere Fuß 11 kann in einer Abwandlung des Ausführungsbeispiels aber auch lösbar mit der Basis 9 verriegelt sein. Der vordere Fuß 11 der linken Fahrzeugsitzseite kann mit dem vorderen Fuß 11 der rechten Fahrzeugsitzseite über eine vordere Quertraverse verbunden sein. Am vorderen Fuß 11 ist mittels einer Schwinge 13 das Sitzkissen 3 angelenkt, wobei diese Schwinge 13 zwei Enden aufweist und im Bereich dieser beiden Enden jeweils ein Gelenk vorgesehen ist, von denen ein erstes Gelenk I, vorliegend ein Drehgelenk, die Anlenkung der Schwinge 13 am vorderen Fuß 11 bildet. Ein zweites Gelenk II, vorliegend ein Drehgelenk, bildet die Anlenkung der Schwinge 13 am Sitzkissen 3, vorliegend in einem vorderen Endbereich des Sitzkissens 3.

An der Basis 9 ist ferner hinter dem vorderen Fuß 11 ein vom vorderen Fuß 11 gesondert ausgebildeter hinterer Fuß 21 angeordnet. Der hintere Fuß 21 der linken Fahrzeugsitzseite ist mit dem hinteren Fuß 21 der rechten Fahrzeugsitzseite über eine Querverbindung, insbesondere ein Querrohr 22 verbunden. Der hintere Fuß 21 ist mittels eines dritten Gelenks III, vorliegend einem weiteren Beschlag 25, an dem vorderen Fuß 11 schwenkbar angelenkt. Der weitere Beschlag 25 kann ein Rastbeschlag sein. Insbesondere zur Elektrifizierung des erfindungsgemäßen Fahrzeugsitzes kann der weitere Beschlag 25 aber auch als ein Getriebebeschlag ausgebildet sein. Bei einer Ausführung als Getriebebeschlag kann der hintere Fuß 21 beim Einstellen des Beschlags eine Taumelbewegung relativ zur Basis 9 ausführen. Die Taumelbewegung weist gegenüber einer reinen Drehung eine überlagerte Exzentrizität auf. Der weitere Beschlag 25 ermöglicht somit eine Drehbewegung mit überlagerter Taumelbewegung des hinteren Fußes 21 bzw. eine Drehbewegung des hinteren Fußes 21.

Durch den weiteren Beschlag 25 ist eine Schwenkbewegung des hinteren Fußes 21 um das dritte Gelenk III verriegelbar. Somit ist der hintere Fuß 21 mittels des weiteren Beschlags 25 über den vorderen Fuß 11 gelenkig mit der Basis 9 verbunden. Der hintere Fuß 21 ist zudem, vorliegend in einem oberen Bereich des hinteren Fußes 21, mittels eines vierten Gelenks IV, vorliegend ein Drehgelenk, an der Rückenlehne 5 schwenkbar angelenkt.

Das Sitzkissen 3 ist beidseitig mittels genau eines ersten Beschlags 7, vorliegend unmittelbar, an der Rückenlehne 5 angelenkt. Hierzu ist der rahmenförmige Sitzkissenträger 3a, genauer gesagt dessen beiden Seitenteile, in Fahrtrichtung hinten mit einem Arm 3b versehen, der vorliegend am Sitzkissenträger 3a angeformt ist und schräg nach oben und hinten absteht. Die Beschläge 7 bilden jeweils ein fünftes Gelenk V. Die beiden fünften Gelenke V bilden somit die Schwenkachse A. In einem Endbereich des Arms 3b des Sitzkissenträgers 3a ist jeweils ein erstes Beschlagteil des ersten Beschlags 7 angebracht. Ein relativ zu dem ersten Beschlagteil um die Schwenkachse A schwenkbares und mit dem ersten Beschlagteil verriegelbares zweites Beschlagteil des ersten Beschlags 7 ist an der Rückenlehne 5 befestigt. Die Rückenlehne 5 ist mittels des ersten Beschlags 7 in ihrer Neigung relativ zu dem Sitzkissen 3 einstellbar. Der erste Beschlag 7 ist versetzt zum vierten Gelenk IV angeordnet. In der Designstellung befindet sich das fünfte Gelenk V oberhalb und in Fahrrichtung hinter dem vierten Gelenk IV.

Der Fahrzeugsitz 1 weist in Querrichtung y betrachtet auf jeder Sitzseite genau einen hinteren Fuß 21 auf. Jeder der beiden hinteren Füße 21 ist mittels genau eines weiteren Beschlags 25 an dem zugehörigen vorderen Fuß 11 angelenkt. An einem Endbereich eines jeden hinteren Fußes 21 ist jeweils ein erstes Beschlagteil des Beschlags 25 angebracht. Ein relativ zu dem ersten Beschlagteil schwenkbares und mit dem ersten Beschlagteil verriegelbares zweites Beschlagteil des Beschlags 25 ist an dem hinteren Fuß 21 befestigt. Der hintere Fuß 21 ist mittels des weiteren Beschlags 25 in seiner Neigung relativ zu der Basis 9 einstellbar. In der Designstellung befindet sich der weitere Beschlag 25 in Fahrrichtung vor dem vierten Gelenk IV.

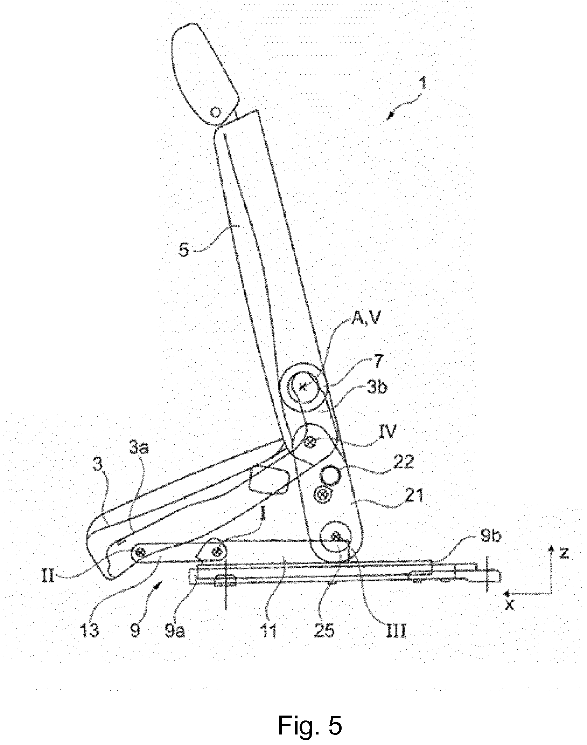

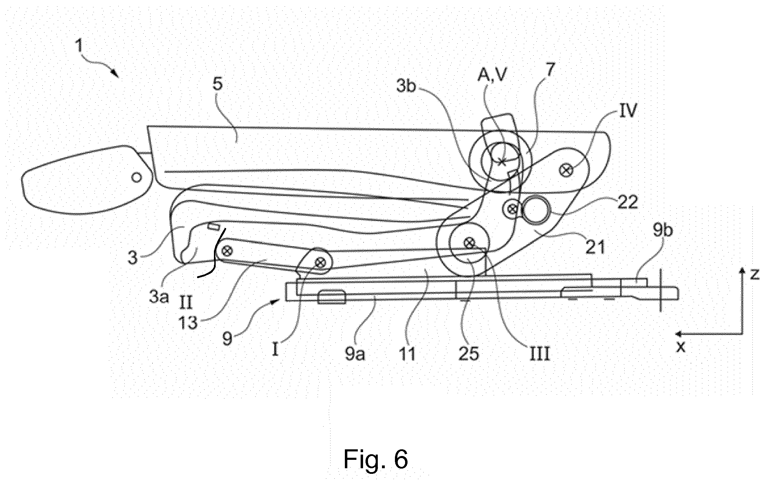

Der Fahrzeugsitz 1 kann aus der in Figur 4 dargestellten zur Personenbeförderung geeigneten Gebrauchsstellung in eine in Figur 5 dargestellte Einstiegsstellung überführt werden. In der Einstiegsstellung ist der Fahrzeugsitz 1 im Vergleich zu den Gebrauchsstellungen relativ zur Basis 9 nach vorne versetzt. Vorzugsweise ist der Fahrzeugsitz 1 zudem mittels der Sitzschienen 9a, 9b in Längsrichtung nach vorne verschoben. Dadurch ist ein Zutritt zu einer hinter dem Fahrzeugsitz 1 angeordneten Sitzreihe erleichtert. Zusätzlich kann der Fahrzeugsitz 1 aus der Gebrauchsstellung in eine in Figur 6 dargestellte Bodenstellung überführt werden, in der die Rückenlehne 5 weitgehend horizontal angeordnet ist und eine Rückseite der Rückenlehne 5 als erweiterter Ladeboden eines Fahrzeugs dienen kann. In den Gebrauchsstellungen und der in Figur 6 dargestellten Bodenstellung ist der hintere Fuß 21 mittels des Beschlags 25 fest mit dem vorderen Fuß 11 und damit der Basis 9 verriegelt.

Das erste Gelenk I, das zweite Gelenk II, das dritte Gelenk III und das vierte Gelenk IV bilden eine erste Viergelenkanordnung zur Überführung des Fahrzeugsitzes 1 aus den Gebrauchsstellungen in die Einstiegsstellung bei verriegelten ersten Beschlägen 7 und entriegelten weiteren Beschlägen 25 (bei einer Ausführung der weiteren Beschläge 25 als Rastbeschläge) bzw. bei verriegelten ersten Beschlägen 7 und antreibbaren bzw. angetriebenen weiteren Beschlägen 25 (bei einer Ausführung der weiteren Beschläge 25 als Getriebebeschläge).

Zur Überführung des Fahrzeugsitzes 1 aus einer der Gebrauchsstellungen in die Einstiegsstellung wird der weitere Beschlag 25 entriegelt (Rastbeschlag) bzw. angetrieben (Getriebebeschlag). Dadurch kann der hintere Fuß 21 um das dritte Gelenk III nach vorne schwenken. Infolge des Schwenkens des hinteren Fußes 21 um das dritte Gelenk III verlagert die zuvor beschriebene erste Viergelenkanordnung das Sitzkissen 3 und die mittels der ersten Beschläge 7 mit dem Sitzkissen verriegelte Rückenlehne 5 nach vorne. Die Rückenlehne 5 ist dabei in starrer Anordnung relativ zum Sitzkissen 3, schwenkt aber insgesamt nach vorne. Die um das erste Gelenk I nach vorne schwenkende Schwinge 13 senkt das vordere Ende des Sitzkissens 3 ab, während die Schwenkbewegung des hinteren Fußes 21 um das dritte Gelenk III das hintere Ende des Sitzkissens 3 anhebt. In den Gebrauchsstellungen ist die zuvor beschriebene erste Viergelenkanordnung durch den weiteren Beschlag 25 verriegelt bzw. wird nicht mehr angetrieben.

Beim Übergang von der Gebrauchsstellung in die Einstiegsstellung wird vorzugsweise die Verriegelung der Sitzschienen 9a und 9b zwangsgesteuert entriegelt, so dass die zweite Sitzschiene 9b relativ zur ersten Sitzschiene 9a nach vorne verfahrbar ist, was den Raum hinter dem Fahrzeugsitz 1, also das Einstiegsmaß, vergrößert und den Zugang zusätzlich erleichtert. Dies geschieht beispielsweise, indem ein mit dem hinteren Fuß 21 verbundenes Bauteil beim Schwenken des hinteren Fußes die Schienenverriegelungsvorrichtung betätigt und entriegelt.

Wenn die Einstiegsstellung erreicht ist, in welcher der Zugang zu einer hinteren Sitzreihe erleichtert ist, kann optional der weitere Beschlag 25 verriegeln bzw. es erfolgt kein weiterer Antrieb des weitere Beschlag 25 mehr, so dass der hintere Fuß 21 und der vordere Fuß 11 vorzugsweise zumindest mittelbar miteinander verriegelt sind. Die Rückkehr in die zuvor eingenommene Gebrauchsstellung erfolgt nach dem Entriegeln des weiteren Beschlags 25 (bei einer Ausführung als Rastbeschlag) bzw. durch einen entgegengesetzten Antrieb des weiteren Beschlags 25 (bei einer Ausführung als Getriebebeschlag) in umgekehrter Reihenfolge der beschriebenen Schritte.

Bei verriegeltem weiteren Beschlag 25 bilden das erste Gelenk I, das zweite Gelenk II, das vierte Gelenk IV und das fünfte Gelenk V eine zweite Viergelenkanordnung, insbesondere zur Überführung des Fahrzeugsitzes 1 aus einer der Gebrauchsstellungen in die Bodenstellung. Zur Überführung des Fahrzeugsitzes 1 aus einer der Gebrauchsstellungen in die Bodenstellung werden die ersten Beschläge 7 entriegelt. Dadurch kann die Rückenlehne 5 um das vierte Gelenk IV nach vorne schwenken. Infolge des Schwenkens der Rückenlehne 5 um das vierte Gelenk IV verlagert die zuvor beschriebene zweite Viergelenkanordnung das Sitzkissen 3 nach vorne und untern. Die Rückenlehne 5 liegt vorzugsweise horizontal auf dem Sitzkissen 3 auf. In den Gebrauchsstellungen ist die zweite Viergelenkanordnung durch die ersten Beschläge 7 verriegelt.

Bei der Neigungseinstellung der Rückenlehne 5 werden die ersten Beschläge 7 entriegelt, die Rückenlehne 5 um die Schwenkachse A in die gewünschte Stellung geschwenkt, wobei sich auch die zweite Viergelenkanordnung bewegt, und dann jeder erste Beschlag 7 wieder verriegelt. Die Bewegung der zweiten Viergelenkanordnung ändert auch die Neigung des Sitzkissens 3. Die Rückenlehne 5 kann auch flach nach hinten geschwenkt werden, so dass der Fahrzeugsitz 1 eine Liegestellung einnimmt.

Sämtliche Gelenke I, II, III, IV, V sind als Drehgelenke ausgebildet, die jeweils eine Drehung um jeweils eine parallel zur Querrichtung verlaufende Drehachse ermöglichen. Das erste Gelenk I definiert eine erste Drehachse, das zweite Gelenk II definiert eine zweite Drehachse, das dritte Gelenk I definiert eine dritte Drehachse, das vierte Gelenk IV definiert eine vierte Drehachse und das fünfte Gelenk V definiert eine fünfte Drehachse, nämlich die Schwenkachse A. Wie zuvor beschrieben ist bei einer Ausführung der Beschläge 7, 25 als Getriebebeschläge der reinen Drehbewegung eine Taumelbewegung überlagert. Die betrifft das fünfte Gelenk (erster Beschlag 7) und das dritte Gelenk (weiterer Beschlag 25).

Die Bezeichnungen erster Beschlag 7 und weiterer Beschlag 25 bedeuten nicht, dass beide Beschläge 7, 25 zur Ausführung der Erfindung notwendig sind.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

### Bezugszeichenliste

- 1: Fahrzeugsitz
- 3: Sitzkissen
- 3a: Sitzkissenträger
- 3b: Arm
- 5: Rückenlehne
- 7: Beschlag, erster Beschlag
- 9: Basis
- 9a: erste Sitzschiene
- 9b: zweite Sitzschiene
- 11: vorderer Fuß
- 13: Schwinge
- 21: hinterer Fuß
- 22: Querrohr
- 23: Schloss
- 25: Beschlag, weiterer Beschlag
- I: erstes Gelenk
- II: zweites Gelenk
- III: drittes Gelenk
- IV: viertes Gelenk
- V: fünftes Gelenk
- A: Schwenkachse
- x: Längsrichtung
- z: Vertikalrichtung

## Patentansprüche

1. Fahrzeugsitz (1), insbesondere Kraftfahrzeugsitz, der von wenigstens einer zur Personenbeförderung geeigneten Gebrauchsstellung in wenigstens eine Nichtgebrauchsstellung überführbar ist, aufweisend:
a) ein Sitzkissen (3) mit einem Sitzkissenträger (3a),
b) eine Rückenlehne (5),
c) eine mit einem Fahrzeug verbindbare Basis (9),
d) eine Schwinge (13), die mittels eines ersten Gelenks (I) mit der Basis (9) oder einem mit der Basis (9) fest verbundenen Bauteil (11) schwenkbar verbunden ist, und mittels eines zweiten Gelenks (II) mit dem Sitzkissenträger (3a) des Sitzkissens (3) schwenkbar verbunden ist,
e) einen hinteren Fuß (21), der mittels eines dritten Gelenks (III) mit der Basis (9) oder einem mit der Basis (9) fest verbundenen Bauteil (11) schwenkbar verbunden ist, wobei eine Schwenkbewegung des hinteren Fußes (21) um das dritte Gelenk (III) verriegelbar ist, und wobei der hintere Fuß (21) mittels eines vierten Gelenks (IV) mit der Rückenlehne (5) schwenkbar verbunden ist,
f) ein fünftes Gelenk (V), das die Rückenlehne (5) mit dem Sitzkissenträger (3a) verbindet,
wobei
g) wenigstens eines der Gelenke (I, II, III, IV, V) ein Beschlag (7, 25) ist, **dadurch gekennzeichnet, dass**
h) das fünfte Gelenk (V) ein Beschlag (7) ist.

2. Fahrzeugsitz (1) nach Anspruch 1, **dadurch gekennzeichnet, dass** der Beschlag (7) ein Rastbeschlag ist.

3. Fahrzeugsitz (1) nach Anspruch 1, **dadurch gekennzeichnet, dass** der Beschlag (7) ein Getriebebeschlag ist.

4. Fahrzeugsitz (1) nach einem der Ansprüche 1 bis 3, **dadurch gekennzeichnet, dass** eine Schwenkbewegung des hinteren Fußes (21) um das dritte Gelenk (III) mittels eines Schlosses (23) verriegelbar ist.

5. Fahrzeugsitz (1) nach Anspruch 4, **dadurch gekennzeichnet, dass** das Schloss (23) an dem hinteren Fuß (21) befestigt ist, und das Schloss (23) mit einem Gegenelement der Basis (9), insbesondere einem Bolzen, verriegelbar ist.

6. Fahrzeugsitz (1) nach einem der Ansprüche 1 bis 3, **dadurch gekennzeichnet, dass** das dritte Gelenk (III) ein weiterer Beschlag (25) ist.

7. Fahrzeugsitz (1) nach Anspruch 6, **dadurch gekennzeichnet, dass** der weitere Beschlag (25) ein Rastbeschlag ist.

8. Fahrzeugsitz (1) nach Anspruch 7, **dadurch gekennzeichnet, dass** der weitere Beschlag (25) ein Getriebebeschlag ist

9. Fahrzeugsitz (1) nach Anspruch 8, **dadurch gekennzeichnet, dass** der weitere Beschlag (25) eine Drehbewegung des hinteren Fußes (21) mit überlagerter Taumelbewegung ermöglicht.

10. Fahrzeugsitz (1) nach einem der Ansprüche 1 bis 9, **dadurch gekennzeichnet, dass** der Fahrzeugsitz (1) aus der wenigstens einen Gebrauchsstellung in eine Einstiegsstellung als Nichtgebrauchsstellung überführbar ist.

11. Fahrzeugsitz (1) nach Anspruch 10, **dadurch gekennzeichnet, dass** das erste Gelenk (I), das zweite Gelenk (II), das dritte Gelenk (III) und das vierte Gelenk (IV) eine Viergelenkanordnung zur Überführung des Fahrzeugsitzes (1) aus der wenigstens einen Gebrauchsstellung in die Einstiegsstellung bilden.

12. Fahrzeugsitz (1) nach einem der Ansprüche 1 bis 11, **dadurch gekennzeichnet, dass** der Fahrzeugsitz (1) aus der wenigstens einen Gebrauchsstellung in eine Bodenstellung als Nichtgebrauchsstellung überführbar ist.

13. Fahrzeugsitz (1) nach Anspruch 12, **dadurch gekennzeichnet, dass** das erste Gelenk (I), das zweite Gelenk (II), das vierte Gelenk (IV) und das fünfte Gelenk (V) eine Viergelenkanordnung zur Überführung des Fahrzeugsitzes (1) aus der wenigstens einen Gebrauchsstellung in die Bodenstellung bilden.

14. Fahrzeugsitz (1) nach einem der Ansprüche 1 bis 13, **dadurch gekennzeichnet, dass** die Basis (9) als eine Sitzschienenanordnung ausgebildet ist, welche die Möglichkeit einer Längseinstellung des Fahrzeugsitzes (1) in und entgegen einer Längsrichtung (x) ermöglicht.

## Claims

1. Vehicle seat (1), in particular motor vehicle seat, which can be transferred from at least one use position suitable for passenger conveyance into at least one non-use position, having:
a) a seat cushion (3) with a seat cushion carrier (3a),
b) a backrest (5),
c) a base (9) which can be connected to a vehicle,
d) a rocker (13) which is pivotably connected by means of a first joint (I) to the base (9) or to a component (11) fixedly connected to the base (9), and is pivotably connected by means of a second joint (II) to the seat cushion carrier (3a) of the seat cushion (3),
e) a rear foot (21) which is pivotably connected by means of a third joint (III) to the base (9) or to a component (11) fixedly connected to the base (9), wherein a pivoting movement of the rear foot (21) about the third joint (III) can be locked, and wherein the rear foot (21) is pivotably connected by means of a fourth joint (IV) to the backrest (5),
f) a fifth joint (V) which connects the backrest (5) to the seat cushion carrier (3a),
wherein
g) at least one of the joints (I, II, III, IV, V) is a fitting (7, 25),
**characterized in that**
h) the fifth joint (V) is a fitting (7).

2. Vehicle seat (1) according to Claim 1, **characterized in that** the fitting (7) is a latching fitting.

3. Vehicle seat (1) according to Claim 1, **characterized in that** the fitting (7) is a geared fitting.

4. Vehicle seat (1) according to one of Claims 1 to 3, **characterized in that** a pivoting movement of the rear foot (21) about the third joint (III) can be locked by means of a lock (23).

5. Vehicle seat (1) according to Claim 4, **characterized in that** the lock (23) is fastened to the rear foot (21), and the lock (23) can be locked by a counter-element of the base (9), in particular a pin.

6. Vehicle seat (1) according to one of Claims 1 to 3, **characterized in that** the third joint (III) is a further fitting (25).

7. Vehicle seat (1) according to Claim 6, **characterized in that** the further fitting (25) is a latching fitting.

8. Vehicle seat (1) according to Claim 7, **characterized in that** the further fitting (25) is a geared fitting.

9. Vehicle seat (1) according to Claim 8, **characterized in that** the further fitting (25) allows a rotary movement of the rear foot (21) with a superimposed tumbling movement.

10. Vehicle seat (1) according to one of Claims 1 to 9, **characterized in that** the vehicle seat (1) can be transferred from the at least one use position into an ingress position as non-use position.

11. Vehicle seat (1) according to Claim 10, **characterized in that** the first joint (I), the second joint (II), the third joint (III) and the fourth joint (IV) form a four-joint arrangement for transferring the vehicle seat (1) from the at least one use position into the ingress position.

12. Vehicle seat (1) according to one of Claims 1 to 11, **characterized in that** the vehicle seat (1) can be transferred from the at least one use position into a floor position as non-use position.

13. Vehicle seat (1) according to Claim 12, **characterized in that** the first joint (I), the second joint (II), the fourth joint (IV) and the fifth joint (V) form a four-joint arrangement for transferring the vehicle seat (1) from the at least one use position into the floor position.

14. Vehicle seat (1) according to one of Claims 1 to 13, **characterized in that** the base (9) is formed as a seat rail arrangement which allows the possibility of a longitudinal adjustment of the vehicle seat (1) in and counter to a longitudinal direction (x).

## Revendications

1. Siège de véhicule (1), notamment siège de véhicule automobile, qui est peut être transféré d'au moins une position d'utilisation appropriée pour le transport de personnes à au moins une position de non-utilisation, comprenant :
a) un coussin de siège (3) muni d'un support de coussin de siège (3a),
b) un dossier (5),
c) une base (9) pouvant être reliée à un véhicule,
d) un bras oscillant (13) qui est relié de manière pivotante au moyen d'une première articulation (I) à la base (9) ou à un composant (11) relié solidement à la base (9), et qui est relié de manière pivotante au moyen d'une deuxième articulation (II) au support de coussin de siège (3a) du coussin de siège (3),
e) un pied arrière (21) qui est relié de manière pivotante au moyen d'une troisième articulation (III) à la base (9) ou à un composant (11) relié solidement à la base (9), un mouvement de pivotement du pied arrière (21) autour de la troisième articulation (III) pouvant être bloqué, et le pied arrière (21) étant relié de manière pivotante au moyen d'une quatrième articulation (IV) au dossier (5),
f) une cinquième articulation (V) qui relie le dossier (5) au support de coussin de siège (3a),
g) au moins une des articulations (I, II, III, IV, V) étant une ferrure (7, 25),
**caractérisé en ce que**
h) la cinquième articulation (V) est une ferrure (7).

2. Siège de véhicule (1) selon la revendication 1, **caractérisé en ce que** la ferrure (7) est une ferrure d'arrêt.

3. Siège de véhicule (1) selon la revendication 1, **caractérisé en ce que** la ferrure (7) est une ferrure de transmission.

4. Siège de véhicule (1) selon l'une quelconque des revendications 1 à 3, **caractérisé en ce qu'**un mouvement de pivotement du pied arrière (21) autour de la troisième articulation (III) peut être bloqué au moyen d'un verrou (23).

5. Siège de véhicule (1) selon la revendication 4, **caractérisé en ce que** le verrou (23) est fixé sur le pied arrière (21), et le verrou (23) peut être bloqué avec un élément complémentaire de la base (9), notamment un boulon.

6. Siège de véhicule (1) selon l'une quelconque des revendications 1 à 3, **caractérisé en ce que** la troisième articulation (III) est une ferrure supplémentaire (25).

7. Siège de véhicule (1) selon la revendication 6, **caractérisé en ce que** la ferrure supplémentaire (25) est une ferrure d'arrêt.

8. Siège de véhicule (1) selon la revendication 7, **caractérisé en ce que** la ferrure supplémentaire (25) est une ferrure de transmission.

9. Siège de véhicule (1) selon la revendication 8, **caractérisé en ce que** la ferrure supplémentaire (25) permet un mouvement de rotation du pied arrière (21) avec un mouvement basculant superposé.

10. Siège de véhicule (1) selon l'une quelconque des revendications 1 à 9, **caractérisé en ce que** le siège de véhicule (1) peut être transféré de ladite au moins une position d'utilisation dans une position d'accès en tant que position de non-utilisation.

11. Siège de véhicule (1) selon la revendication 10, **caractérisé en ce que** la première articulation (I), la deuxième articulation (II), la troisième articulation (III) et la quatrième articulation (IV) forment un agencement à quatre articulations pour le transfert du siège de véhicule (1) de ladite au moins une position d'utilisation dans la position d'accès.

12. Siège de véhicule (1) selon l'une quelconque des revendications 1 à 11, **caractérisé en ce que** le siège de véhicule (1) peut être transféré de ladite au moins une position d'utilisation dans une position de fond en tant que position de non-utilisation.

13. Siège de véhicule (1) selon la revendication 12, **caractérisé en ce que** la première articulation (I), la deuxième articulation (II), la quatrième articulation (IV) et la cinquième articulation (V) forment un agencement à quatre articulations pour le transfert du siège de véhicule (1) de ladite au moins une position d'utilisation dans la position de fond.

14. Siège de véhicule (1) selon l'une quelconque des revendications 1 à 13, **caractérisé en ce que** la base (9) est configurée sous la forme d'un agencement de glissières de siège, qui permet la possibilité d'un réglage longitudinal du siège de véhicule (1) dans et à l'encontre d'une direction longitudinale (x).
